# EUROPÄISCHE PATENTSCHRIFT

(11) **EP 1 916 428 B1**
(45) Veröffentlichungstag und Bekanntmachung des Hinweises auf die Patenterteilung: **17.08.2016**
(21) Anmeldenummer: 07014267.4
(22) Anmeldetag: 20.07.2007
(51) Int. Cl.: F16B 12/24

(54) **Möbeldistanzvorrichtung**
Furniture distancing device
Dispositif de mesure de distance d'un meuble

(30) Priorität: 23.10.2006 DE 202006016347 U
(43) Veröffentlichungstag der Anmeldung: 30.04.2008
(73) Patentinhaber: Palmberg Büroeinrichtungen + Service GmbH, 23923 Schönberg (DE)
(72) Erfinder: Blaumann, Uwe, 23923 Schöneberg (DE)
(74) Vertreter: Manasse, Uwe

(56) Entgegenhaltungen:
- WO-A-86/03110
- AT-B- 297 255
- DE-A1- 2 106 639
- DE-A1- 3 245 948
- DE-U1- 9 410 703

## Beschreibung

Die Erfindung betrifft eine Möbeldistanzvorrichtung zur Erzielung eines Abstandes zwischen zwei miteinander verbindbaren Möbelelementen, mit mindestens einem Distanzstück und mit mindestens einem Verbindungsstück zur Verbindung der beiden Möbelelemente miteinander.

Eine derartige Möbeldistanzvorrichtung dient dazu, zwei benachbarte Möbelelemente wie beispielsweise Schrankelemente miteinander zu verbinden und gleichzeitig in einem Abstand voneinander zu halten. Eine solche Anordnung hat nicht nur optische, sondern auch technische Vorteile. Die technischen Vorteile bestehen beispielsweise darin, dass mechanische Einflüsse und Beschädigungen an den einander zugewandten und benachbarten Seiten der beiden miteinander zu verbindenden Möbelelemente vermieden werden, welche ansonsten im Falle einer direkten mechanischen Berührung auftreten und nach Lösen der Verbindung für eine anderweitige Verwertung den Wert der Möbelelemente mindern oder gar zunichte machen können. Für die Verbindung werden Verbindungsstücke und zur Erzielung des erforderlichen Abstandes Distanzstücke verwendet.

Die DE 94 10 703 U1, in welcher als Aufgabe angegeben ist, bei einer Mehrdübelbefestigung eine lagerichtige, gegenseitige Verankerung der Dübel im Möbelteil zu realisieren, offenbart eine Anordnung aus insbesondere zwei Dübeln und einer Verbindungsplatte, über die die Dübel miteinander verbunden sind. Bei einer alternativen Ausführung können die Einzelteile, also die Dübel und die Verbindungsplatte, auch getrennt voneinander hergestellt und erst kurz vor dem Einsetzen in das Möbelteil zusammengefügt werden. Die Dübel weisen Schlitze sowie Ausnehmungen zur Befestigung weiterer Anbauteile auf. Ferner ist in der Verbindungsplatte eine Ausnehmung ausgebildet, die beispielsweise zum Ansetzen in dafür vorgesehene Ausnehmungen an den Möbelteilen oder ebenfalls zur Befestigung weiterer Anbauteile oder für beide Zwecke verwendet werden kann.

Es ist Aufgabe der vorliegenden Erfindung, eine Möbeldistanzvorrichtung vorzuschlagen, die gegenüber herkömmlichen Vorrichtungen dieser Art insbesondere einen einfacheren Aufbau und eine einfachere Anwendung ermöglicht.

Diese Aufgabe wird gelöst durch eine Möbeldistanzvorrichtung zur Erzielung eines Abstandes zwischen zwei miteinander verbindbaren Möbelelementen, mit mindestens einem Distanzstück und mit mindestens einem Verbindungsstück zur Verbindung der beiden Möbelelemente miteinander, wobei das Distanzstück an dem einen Möbelelement befestigbar ist, einen plättchenförmigen Körper aufweist, der zwischen die beiden Möbelelemente derart positionierbar ist, dass das eine Möbelelement an der einen Seite und das andere Möbelelement an der gegenüberliegenden anderen Seite des plättchenförmigen Körpers anliegt, mindestens eine Aussparung oder Öffnung zur Aufnahme des mindestens einen die beiden Möbelelemente miteinander verbindenden Verbindungsstückes und ein erstes Arretiermittel aufweist, und das Verbindungsstück an dem anderen Möbelelement befestigbar ist und ein zweites Arretiermittel aufweist, das mit dem ersten Arretiermittel am Distanzstück lösbar in Eingriff bringbar ist.

Dadurch, dass erfindungsgemäß das mindestens eine Distanzstück einen plättchenförmigen Körper aufweist, lässt sich das Distanzstück in besonders einfacher und geschickter Weise zwischen den zu verbindenden beiden Möbelelementen positionieren, indem der plättchenförmige Körper des Distanzstückes flächig zwischen jenen beiden Möbelelementen gelegt wird. Besondere Befestigungsmittel für die Anordnung des erfindungsgemäßen Distanzstückes sind nicht erforderlich. Denn fixiert wird das erfindungsgemäße Distanzstück durch mindestens ein Verbindungsstück, welches gewöhnlich für die Verbindung der beiden Möbelelemente verwendet wird und somit ohnehin vorhanden ist. Die Fixierung des Distanzstückes durch das Verbindungsstück erfolgt mit Hilfe einer erfindungsgemäß im plättchenförmigen Körper des Distanzstückes vorgesehenen Aussparung oder Öffnung, indem das Verbindungsstück von einer solchen Aussparung oder Öffnung aufgenommen wird. An denjenigen Stellen, die für die Anordnung der Verbindungsstücke, beispielsweise Bohrungen oder Sacklöcher für stiftförmige Verbindungsstücke, wie z. B. die üblicherweise verwendeten Holzdübel, an den Möbelelementen vorgesehen und gewöhnlich auch vorgegeben sind, lässt sich dann zusätzlich das erfindungsgemäße Distanzstück durch entsprechende Ausrichtung der in dessen plättchenförmigen Körper ausgebildeten Aussparung(en) oder Öffnung(en) entsprechend positionieren.

Dadurch, dass außerdem die erfindungsgemäße Möbeldistanzvorrichtung zur Verbindung der beiden Möbelelemente ein besonderes Verbindungsstück aufweist, wobei das Distanzstück an dem einen Möbelelement befestigbar ist und ein erstes Arretiermittel aufweist und das Verbindungsstück mit dem anderen Möbelelement befestigbar ist und ein zweites Arretiermittel aufweist, das mit dem ersten Arretiermittel am Distanzstück lösbar in Eingriff bringbar ist, bietet die Erfindung zusätzlich den Vorteil, dass sich die beiden Möbelelemente, welche im verbundenen Zustand mit Hilfe des Distanzstückes auf Abstand gehalten und durch das Verbindungsstück miteinander verbunden sind, jederzeit für eine anderweitige Verwendung wieder leicht lösen lassen und das Distanzstück gleichzeitig auch für den lösbaren Eingriff mit dem am gegenüberliegenden anderen Möbelelement befestigten Verbindungsstück genutzt wird.

An dieser Stelle sei noch angemerkt, dass unter "Öffnung" insbesondere ein Durchbruch durch den plättchenförmigen Körper verstanden wird, wobei der Durchbruch vom plättchenförmigen Körper vollständig umschlossen ist. Vorzugsweise kann die Öffnung als Bohrloch ausgebildet sein. Ferner sei in diesem Zusammenhang angemerkt, dass unter "Aussparung" demgegenüber insbesondere eine zur Seite des plättchenförmigen Körpers hin offene Ausnehmung zu verstehen ist, wodurch sich wahlweise das Distanzstück auch auf besonders einfache Weise durch seitliches Einführen unter gleichzeitiger Aufnahme des Verbindungsstückes in die Aussparung zwischen den beiden miteinander zu verbindenden Möbelelementen platzieren lässt.

Zur Unterstützung der hauptsächlich von dem mindestens einen Verbindungselement in der zuvor beschriebenen Weise bewirkten Fixierung durch Aufnahme in der im plättchenförmigen Körper des Distanzstückes ausgebildeten mindestens einen Aussparung oder Öffnung kann das Distanzstück einen vom plättchenförmigen Körper abstehenden Fortsatz aufweisen, der für einen Eingriff mit mindestens einem der beiden Möbelelemente vorgesehen ist.

Ein solcher Fortsatz kann jeweils an beiden Seiten des plättchenförmigen Körpers des Distanzstückes angeordnet sein bzw. sich durch den plättchenförmigen Körper hindurch erstrecken. Alternativ ist es aber gewöhnlich ausreichend, den Fortsatz nur an einer Seite des plättchenförmigen Körpers des Distanzstückes vorzusehen, so dass bei Befestigung eines Distanzstückes am Möbelelement durch Eingriff des Fortsatzes mit diesem Möbelelement die freie Seite des plättchenförmigen Körpers nach außen weist.

Vorzugsweise kann der Fortsatz so ausgebildet sein, dass er mit seinem freien Ende in ein in dem Möbelelement ausgebildetes Loch, insbesondere Sackloch, steckbar ist.

Für eine sichere Befestigung des Distanzstückes am Möbelelement kann der Fortsatz an seiner Außenseite zweckmäßigerweise mit Fixier- oder Arretiermitteln, wie insbesondere einer Rändelung, versehen sein.

Bei einer besonders bevorzugten Ausführung ist der Fortsatz als Hülse ausgebildet, die die mindestens eine Öffnung umgibt. Bei dieser Ausführung erfüllt der hülsenförmige Fortsatz zwei Aufgaben, nämlich zum einen nach Art einer Muffe die Befestigung des Distanzstückes an dem entsprechenden Möbelelement und zum anderen die Aufnahme eines die beiden Möbelelemente miteinander verbindenden Verbindungsstückes.

Vorzugsweise ist die mindestens eine Öffnung als Bohrung ausgebildet, durch die ein stiftförmiges Verbindungsstück steckbar ist, dessen einer Endabschnitt mit dem einen Möbelelement und dessen anderer Endabschnitt mit dem anderen Möbelelement in Eingriff bringbar und vorzugsweise in ein jeweils dort ausgebildetes Sackloch steckbar ist. Hierzu können als stiftförmige Verbindungsstücke in ihrer einfachsten Ausführung die gewöhnlich für die Verbindung von Möbelelementen benutzten Holzdübel in Frage kommen.

Im Falle der Anordnung eines Fortsatzes am Distanzstück kann der Fortsatz das erste Arretiermittel aufweisen. Wenn der Fortsatz als Hülse ausgebildet ist, kann vorzugsweise das erste Arretiermittel in der Hülse vorgesehen sein.

Zweckmäßigerweise bilden die ersten und zweiten Arretiermittel gemeinsam eine Rasteinrichtung.

Vorzugsweise ist das erste Arretiermittel in der mindestens einen Aussparung oder Öffnung ausgebildet oder durch diese sogar selbst gebildet.

Bei einer bevorzugten Weiterbildung weist das Verbindungsstück nach Art eines Dübels einen stiftförmigen Körper mit einem ersten Endabschnitt und einem zweiten Endabschnitt auf, ist mit dem ersten Endabschnitt in ein in dem anderen Möbelelement ausgebildetes Loch, vorzugsweise Sackloch, steckbar und ist am zweiten Endabschnitt mit dem zweiten Arretiermittel versehen.

Das Verbindungsstück kann mit seinem ersten Endabschnitt durch eine zugehörige, im plättchenförmigen Körper des Distanzstückes ausgebildete Öffnung steckbar sein, wodurch bei dieser Weiterbildung das Verbindungsstück gleichzeitig auch zur Fixierung des Distanzstückes dienen kann.

Im Falle einer einseitigen Anordnung einer Hülse am plättchenförmigen Körper eines Distanzstückes kann das Verbindungsstück mit seinem ersten Endabschnitt an der freien Seite des plättchenförmigen Körpers durch die Öffnung in die an der gegenüberliegenden Seite des plättchenförmigen Körpers angeordnete Hülse einführbar sein.

Für eine gute Fixierung im zugehörigen Möbelelement kann der erste Endabschnitt zweckmäßigerweise einen geschuppten Abschnitt aufweisen.

Für eine lösbare Arretierung sollte der zweite Endabschnitt des Verbindungsstückes im Bereich des zweiten Arretiermittels im Wesentlichen in radialer Richtung elastisch deformierbar sein. Hierzu kann der zweite Endabschnitt mindestens zwei radial voneinander beabstandete und im Wesentlichen in radialer Richtung elastisch verbiegbare Abschnitte aufweisen, welche das zweite Arretiermittel oder zumindest Teile des zweiten Arretiermittels bilden. Vorzugsweise sind diese mindestens zwei Abschnitte des zweiten Endabschnittes durch einen Spalt oder Schlitz voneinander getrennt.

Vorzugsweise ist das Verbindungsstück mit seinem zweiten Endabschnitt durch eine zugehörige, im plättchenförmigen Körper des Distanzstückes ausgebildete Öffnung steckbar. Im Fall der Anordnung einer Hülse am plättchenförmigen Körper des Distanzstückes kann das Verbindungsstück mit seinem zweiten Endabschnitt in das freie Ende einer solchen Hülse einführbar sein.

Eine weitere bevorzugte Ausführung der Möbeldistanzvorrichtung weist mindestens ein erstes Distanzstück und ein zweites Distanzstück auf und ist dadurch gekennzeichnet, dass erste Distanzstück mit seiner Hülse in eine Durchgangsbohrung in dem einen Möbelteil und das zweite Distanzstück mit seiner Hülse in eine Bohrung steckbar ist, die in einem dem einen Möbelteil benachbarten Abschnitt des anderen Möbelteils ausgebildet, bei Verbindung der beiden Möbelteile miteinander das freie Ende der Hülse des ersten Distanzstückes benachbart zum zweiten Distanzstück und das erste Distanzstück an einer von dem anderen Möbelteil entfernt gelegenen Seite des Abschnittes des einen Möbelteils positionierbar und das Verbindungsstück mit seinem ersten Endabschnitt durch die Hülse des zweiten Distanzstückes hindurch steckbar und mit seinem zweiten Endabschnitt in das freie Ende der Hülse des ersten Distanzstückes einführbar ist. Diese bevorzugte Ausführung kommt insbesondere dort zum Einsatz, wo zwei Möbelelemente über ein gemeinsames Zwischenelement miteinander verbunden werden sollen, welches beispielsweise gleichzeitig den Oberboden des einen Möbelelementes und den Unterboden des darüber anzuordnenden anderen Möbelelementes bilden kann und dabei sowohl in einem Abstand zum übrigen Körper des einen Möbelelementes als auch zum übrigen Körper des anderen Möbelelementes angeordnet werden soll. In einem solchen Fall ist das erste Distanzstück an dem Zwischenelement oder Unter- bzw. Oberboden angeordnet, indem deren Hülse vom Zwischenelement oder Unter- bzw. Oberboden aufgenommen wird. Dabei darf die Länge der Hülse des ersten Distanzstückes natürlich nicht größer als die Dicke des Zwischenelements oder Unter- bzw. Oberbodens sein.

Zweckmäßigerweise kann zur Erzielung einer gegenseitigen Verrastung das erste Arretiermittel einen flanschartigen ringförmigen Vorsprung und das zweite Arretiermittel eine ringförmig umlaufende Nut aufweisen, in die der ringförmige Vorsprung in Eingriff bringbar ist.

Ferner kann das Verbindungsstück ein mit dem plättchenförmigen Körper eines Distanzstückes benachbart zur Öffnung in Anlage bringbares Stützmittel aufweisen, wodurch die Eingriffstiefe im zugehörigen Möbelelement oder Distanzstück festgelegt werden kann. Das Stützmittel kann als seitlicher Vorsprung oder Kragen ausgebildet sein.

Für den Fall, dass das Verbindungsmittel einen stiftförmigen Körper aufweist, kann das Stützmittel vorzugsweise einen umlaufenden, flanschartigen Kragen bilden. Eine vorteilhafte Weiterbildung zeichnet sich dadurch aus, dass der Kragen eine sich in Richtung auf den ersten Endabschnitt des Verbindungsstückes verjüngende konische Außenfläche und ein in eine Oberfläche des plättchenförmigen Körpers des Distanzstückes mündender Randabschnitt der zugehörigen Öffnung eine sich nach außen erweiternde konische Innenfläche aufweist und die konische Außenfläche des Kragens und die konische Innenfläche des Randabschnittes der Öffnung so zueinander ausgerichtet sind, dass sie im wesentlichen in gegenseitige Anlage aneinander bringbar sind. Das Stützmittel sollte gewöhnlich zwischen dem ersten und dem zweiten Endabschnitt des Verbindungsmittels angeordnet sein, wodurch die Eingriffs- oder Eindringtiefe gleichermaßen für den ersten und den zweiten Endabschnitt definiert werden kann.

Eine weitere bevorzugte Ausführung zeichnet sich dadurch aus, dass der plättchenförmigen Körper des Distanzstückes eine erste Öffnung zur Aufnahme eines ersten Verbindungsstückes gemäß der zuvor beschriebenen besonderen Ausführung mindestens eine zweite Öffnung zur Aufnahme eines zweiten Verbindungsstückes aufweist. Das zweite Verbindungsstück braucht dabei nur besonders einfach gestaltet zu sein, wozu vorzugsweise ein gewöhnlicher Holzdübel Verwendung finden kann. Bei einer Weiterbildung dieser Ausführung kann der plättchenförmige Körper des Distanzstückes mindestens eine dritte Öffnung zur Aufnahme eines dritten Verbindungsstückes aufweisen, wobei das dritte Verbindungsstück ebenfalls wie das zweite Verbindungsstück nur eine einfache Konstruktion zu haben braucht. Somit kann es auch diesbezüglich ausreichend sein, als drittes Verbindungsstück ebenfalls nur einen einfachen gewöhnlichen Holzdübel zu verwenden. Vorzugsweise sollte die für die Aufnahme des besonderen Verbindungsstückes vorgesehene erste Öffnung zwischen der zweiten Öffnung und der dritten Öffnung liegen.

Zur Erzielung eines konstanten Abstandes zwischen zwei miteinander zu verbindenden, benachbarten Möbelelementen sollte der plättchenförmige Körper bei jedem in der Möbeldistanzvorrichtung zu verwendenden Distanzstück eine definierte konstante Dicke aufweisen.

Zweckmäßigerweise sollte der plättchenförmige Körper des Distanzstückes eine Rechteckform haben.

Vorzugsweise ist mindestens ein Seitenrand des plättchenförmigen Körpers als an mindestens einer Seite überstehender flanschartiger Rand ausgebildet. Bei Anordnung des Distanzstückes zwischen zwei miteinander zu verbindenden Möbelelementen übergreift dann der flanschartige Rand eine Seite eines Abschnittes des einen Möbelelementes, wodurch das Distanzstück auf einfache Weise ausgerichtet wird. Insbesondere sollte der flanschartige Rand mindestens entlang einer Langseite des plättchenförmigen Körpers ausgebildet sein.

Nachfolgend werden bevorzugte Ausführungsbeispiele der Erfindung anhand der beiliegenden Zeichnungen näher erläutert. Es zeigen:
- Fig. 1: eine bevorzugte Ausführung eines Distanzstückes einer ersten Art in perspektivischer Ansicht (a), in Draufsicht (b), in Unteransicht (c), in Seitenansicht auf eine Langseite (d), in Seitenansicht auf eine Schmalseite (e) und in einer mittigen Querschnittsansicht entlang der Linie f-f von Fig. 1 c (f);
- Fig. 2: eine bevorzugte Ausführung eines Distanzstückes einer zweiten Art in perspektivischer Ansicht (a), in Draufsicht (b), in Unteransicht (c), in Seitenansicht auf eine Langseite (d), in Seitenansicht auf eine Schmalseite (e) und in einer mittigen Querschnittsansicht entlang der Linie f-f von Fig. 2c(f);
- Fig. 3: einen Verbindungsdübel in einer bevorzugten Ausführung;
- Fig. 4: eine Seitenansicht auf die Langseiten einer beispielhaften Anordnung von zwei übereinanderliegenden kastenförmigen Möbelelementen, welche in nicht näher dargestellter Weise mit Hilfe von Elementen der in den Figuren 1 bis 3 gezeigten Art miteinander verbunden und gleichzeitig im Abstand voneinander gehalten sind;
- Fig. 5: eine Seitenansicht auf die Schmalseiten der kastenförmigen Möbelelemente von Fig. 4, welche für eine bessere Darstellung der für deren Verbindung verwendeten Elemente der in den Figuren 1 bis 3 gezeigten Art in einer voneinander gelösten Anordnung gezeigt sind;
- Fig. 6: eine vergrößerte ausschnittsweise Längsschnittsansicht durch einen unteren Abschnitt des unteren kastenförmigen Möbelelementes in dem in Fig. 5 mit "VI" gekennzeichneten Bereich;
- Fig. 7: eine vergrößerte ausschnittsweise Längsschnittsansicht gemeinsam durch einen oberen Abschnitt des unteren kastenförmigen Möbelelementes und einen benachbarten unteren Abschnitt des oberen kastenförmigen Möbelelementes im verbundenen Zustand in dem in Fig. 5 mit "VII" gekennzeichneten Bereich; und
- Fig. 8: eine vergrößerte ausschnittsweise Längsschnittsansicht durch eine oberen Abschnitt des oberen kastenförmigen Möbelelementes in dem in Fig. 5 mit "VIII" gekennzeichneten Bereich.

Im eingebauten Zustand der ersten und zweiten Distanzstücke 2 und 20 übergreifen die an deren plättchenförmigem Körper 4 bis 24 angeordneten flanschartigen Ränder 5, bzw. 25 die Längekanten der jeweils benachbarten Seitenwand 60a oder 62a und/oder des benachbarten Unter-, Zwischen- oder Oberbodens 64, 66 oder 68 oder eines sonstigen plattenförmigen Möbelelementes. Dies bildet eine weitere Maßnahme zur gewünschten Ausrichtung des länglichen plättchenförmigen Körpers 4 bzw. 24 der Distanzstücke 2, 20 in Richtung der Längserstreckung des Randes der benachbarten Seitenwand 60a bzw. 62a und/oder des benachbarten Unter-, Zwischen- oder Oberbodens 64, 66, 68 oder eines anderen, vorzugsweise plattenförmigen, Möbelelementes.

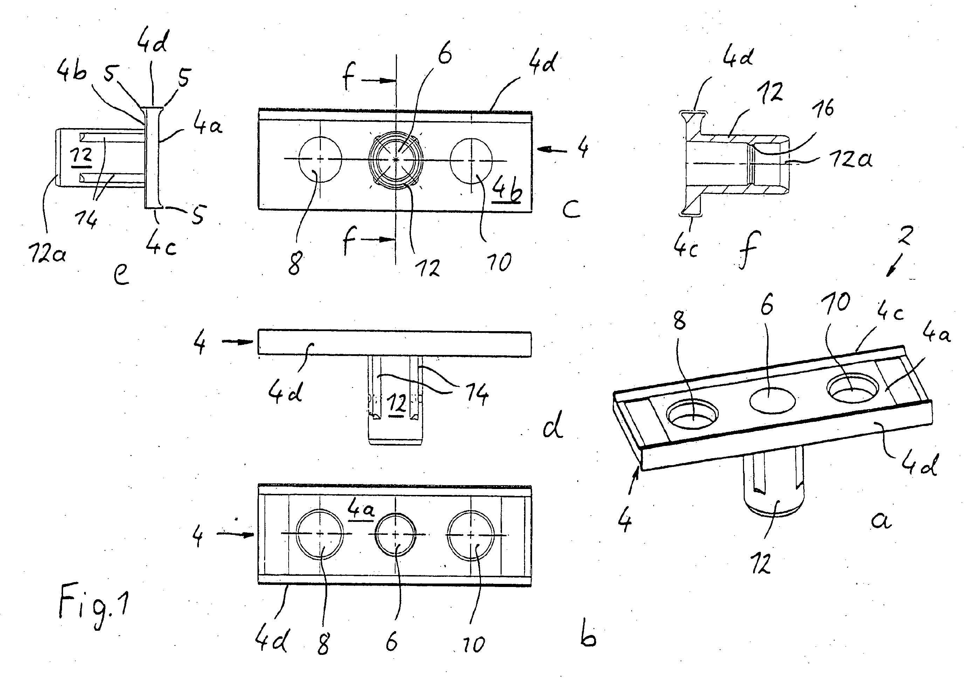

Nachfolgend werden verschiedene Elemente einer bevorzugten Ausführung einer Möbeldistanzvorrichtung sowie deren Verwendung für die Verbindung von Möbelelementen miteinander beispielhaft anhand einer Anordnung zweier kastenförmiger Möbelelemente unter Bezugnahme auf die Figuren 1 bis 8 im einzelnen näher beschrieben.

Fig. 1 zeigt ein Distanzstück einer ersten Art, welches nachfolgend als erstes Distanzstück 2 bezeichnet wird. Das erste Distanzstück 2 weist einen plättchenförmigen Körper 4 auf, der im dargestellten Ausführungsbeispiel eine Rechteckform besitzt. Ferner weist der plättchenförmige Körper 4 eine konstante Dicke auf, so dass die Oberseite 4a in einem konstanten Abstand zu der Unterseite 4b des plättchenförmigen Körpers 4 verläuft. Entlang der einen Langseite 4c ist der plättchenförmigen Körper 4 mit einem sich über die Oberseite 4a erhebenden flanschartigen Rand 5 versehen, wie insbesondere Fig. 1 e erkennen lässt. In gleicher Weise ist im dargestellten Ausführungsbeispiel an der gegenüberliegenden anderen Langseite 4d des plättchenförmigen Körpers 4 ebenfalls ein sich über die Oberseite 4a erhebender flanschartiger Rand 5 ausgebildet. Zusätzlich ist im dargestellten Ausführungsbeispiel die andere Langseite 4d aber auch mit einem sich über die Unterseite 4b des plättchenförmigen Körpers 4 erhebenden flanschartigen Rand 5 versehen, wie ebenfalls Fig. 1 e erkennen lässt.

Im dargestellten Ausführungsbeispiel ist in der Mitte des plättchenförmigen Körpers 4 eine erste Öffnung 6 ausgebildet. Zu beiden Seiten der ersten Öffnung 6 sind im plättchenförmigen Körper 4 außerdem eine zweite Öffnung 8 und eine dritte Öffnung 10 ausgebildet. Alle drei Öffnungen 6, 8 und 10 liegen im dargestellten Ausführungsbeispiel in einer Reihe hintereinander auf einer Mittelachse, die in Richtung der Längserstreckung des plättchenförmigen Körpers 4 verläuft. Die zweite Öffnung 8 und die dritte Öffnung 10 bilden jeweils Durchgangsbohrungen, die die Oberseite 4a mit der Unterseite 4b des plättchenförmigen Körpers 4 verbinden.

Demgegenüber wird die erste Öffnung 6 an der Unterseite 4b des plättchenförmigen Körpers 4 von einer Hülse 12 umschlossen, die an der Unterseite 4b des plättchenförmigen Körpers 4 sitzt und an ihrem freien Ende 12a offen ist. An der Außenseite ist die Hülse 12 mit über den Umfang im Abstand voneinander verteilten Rippen 14 versehen, die sich in Längsrichtung der Hülse 12 erstrecken. Wie Fig. 1f erkennen lässt, ist an einer Stelle der Innenwandung der Hülse 12 ein flanschartiger, ringförmiger Fortsatz 16 angeformt, dessen Funktion an späterer Stelle im Einzelnen beschrieben wird.

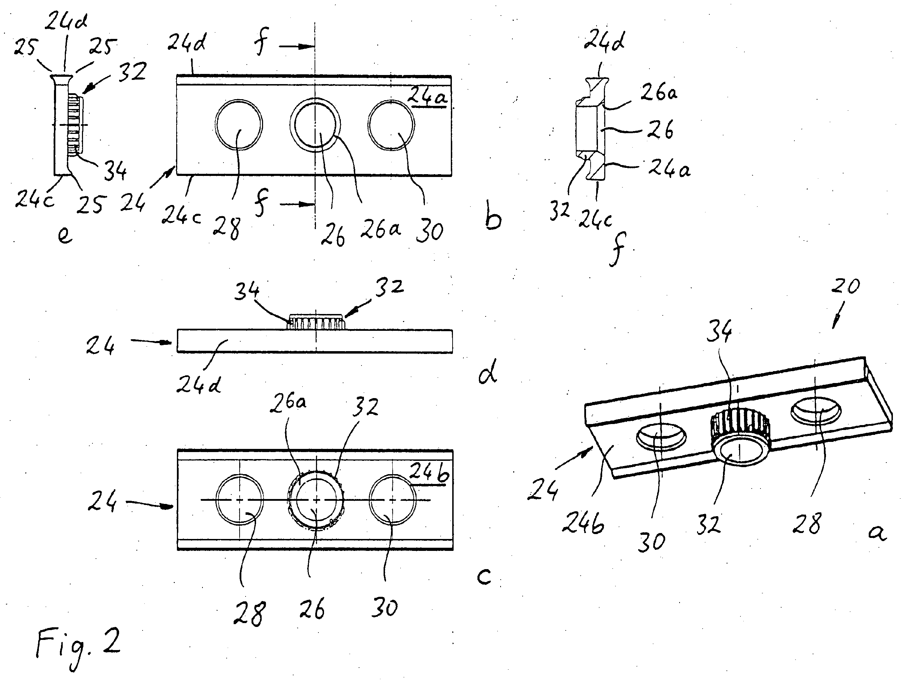

In Fig. 2 ist ein Distanzstück einer zweiten Art dargestellt, welches nachfolgend als zweites Distanzstück 20 bezeichnet wird. Wie das erste Distanzstück 2 weist auch das zweite Distanzstück 20 einen plättchenförmigen Körper 24 auf, der die gleiche Form und die gleichen Abmessungen wie der plättchenförmige Körper 4 des ersten Distanzstückes 2 aufweist. So besitzt auch der plättchenförmige Körper 24 des zweiten Distanzstückes 20 die gleiche Rechteckform und die gleiche Dicke zwischen seiner Oberseite 24a und seiner Unterseite 24b wie der plättchenförmige Körper 4 des ersten Distanzstückes 2. In gleicher Weise wie beim ersten Distanzstück 2 sind auch die Langseiten 24c und 24d des plättchenförmigen Körpers 24 des zweiten Distanzstückes 20 mit einem bzw. zwei in Bezug auf die Oberseite 24a und die Unterseite 24b flanschartig vorstehenden Rändern 25 versehen.

Ebenfalls sind im plättchenförmigen Körper 24 des zweiten Distanzstückes 20 eine erste Öffnung 26, eine zweite Öffnung 28 und eine dritte Öffnung 30 ausgebildet, die im dargestellten Ausführungsbeispiel die gleichen Positionen einnehmen wie die entsprechenden Öffnungen 6, 8 und 10 beim ersten Distanzstück 21. Wie die zweite Öffnung 8 und die dritte Öffnung 10 im ersten Flanschstück 2 handelt es sich bei der zweiten Öffnung 28 und der dritten Öffnung 30 um Durchgangsbohrungen, die die Oberseite 24a mit der Unterseite 24b des plättchenförmigen Körpers 24 des zweiten Distanzstückes 20 verbinden.

Ähnlich wie beim ersten Distanzstück 2 ist an der Unterseite 24b des plättchenförmigen Körpers 24 des zweiten Distanzstückes 20 eine Hülse 32 ausgebildet, die die mittlere erste Öffnung 26 umschließt. Ein Vergleich der Figuren 1 und 2 lässt erkennen, dass die Hülse 32 des zweiten Distanzstückes 20 deutlich kürzer ist als die Hülse 12 des ersten Distanzstückes 2. Ferner unterscheidet sich die Hülse 32 des zweiten Distanzstückes 20 von der Hülse 12 des ersten Distanzstückes 2 dadurch, dass die Innenwandung der Hülse 32 des zweiten Distanzstückes 20 im dargestellten Ausführungsbeispiel keinen flanschartigen ringförmigen Vorsprung aufweist, sondern glatt ist.

Wie insbesondere Fig. 2f erkennen lässt, weist die erste Öffnung 26 einen in die Oberseite 24a des plättchenförmigen Körpers 24 mündenden Randabschnitt 26a mit einer sich nach außen erweiternden konischen Innenfläche auf, deren Funktion an späterer Stelle im Einzelnen erläutert wird.

Ferner lassen die Figuren 1 und 2 erkennen, dass die erste Öffnung 6 des ersten Distanzstückes 2 und die erste Öffnung 26 des zweiten Distanzstückes 20 den gleichen Innendurchmesser haben. Ebenfalls besitzen die zweite Öffnung 8 und die dritte Öffnung 10 des ersten Distanzstückes 2 sowie die zweite Öffnung 28 und die dritte Öffnung 30 des zweiten Distanzstückes 20 den gleichen Innendurchmesser.

Die Außenfläche der Hülse 32 des zweiten Distanzstückes 20 ist mit über den Umfang verteilt angeordneten, voneinander beabstandeten und sich in Längsrichtung der Hülse 32 erstreckenden Rippen 34 versehen, die aufgrund ihrer Vielzahl in der dargestellten Ausführung gemeinsam eine Art Rändelung bilden.

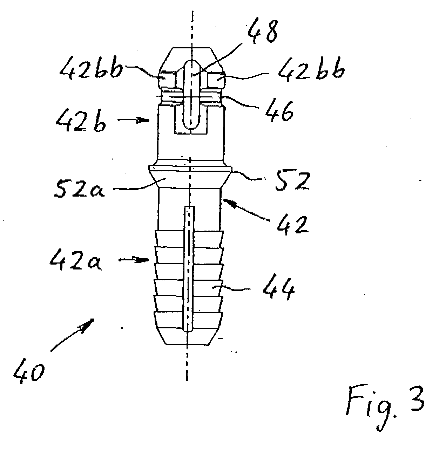

In Fig. 3 ist ein besonderer Verbindungsdübel 40 dargestellt, der ebenfalls Teil der beschriebenen Möbeldistanzvorrichtung ist und einen stiftförmigen Körper 42 mit einem ersten Endabschnitt 42a und einem zweiten Endabschnitt 42b aufweist.

Der erste Endabschnitt 42a ist zur Befestigung des Verbindungsdübels 40 an einem Möbelelement bestimmt. Hierzu ist am Möbelelement eine entsprechende Bohrung vorgesehen, in die der erste Endabschnitt 42a gesteckt wird. Für eine sichere Befestigung und zur Vermeidung von unerwünschtem Spiel sollte der Innendurchmesser einer solchen Bohrung im Möbelelement dem Außendurchmesser des ersten Endabschnittes 42a des Verbindungsdübels 40 entsprechen. Ferner ist für eine sichere Befestigung am Möbelelement der erste Endabschnitt 42a mit einem geschuppten Abschnitt 44 versehen, der die Wirkung von Widerhaken entfaltet, somit für eine sichere Verankerung des ersten Endabschnittes 42a in der zugehörigen Bohrung im Möbelelement sorgt und ein unbeabsichtigtes Lösen des Verbindungsdübels 40 vom Möbelelement verhindert. Gewöhnlich weist das Möbelelement eine Vielzahl von derartigen Bohrungen auf, in die Verbindungsstücke wie der in Fig. 3 dargestellte Verbindungsdübel 40 gesteckt werden können. Häufig sind derartige Bohrungen als Sacklöcher ausgeführt.

Der zweite Endabschnitt 42b des in Fig. 3 dargestellten Verbindungsdübels 40 weist eine umlaufende Nut 46 auf, die an zwei Stellen durch einen in axialer Richtung verlaufenden Schlitz 48 unterbrochen wird. Der Schlitz 48 durchsetzt den zweiten Endabschnitt 42b des stiftförmigen Körpers 42 vollständig in radialer Richtung, wodurch zwei voneinander beabstandete Teilabschnitte 42bb im Bereich des zweiten Endabschnittes 42b gebildet sind. Zumindest im Bereich dieser beiden voneinander durch den Schlitz 48 beabstandeten Teilabschnitte 42bb des zweiten Endabschnittes 42b besteht der stiftförmige Körper 42 aus elastischem Material, so dass die Teilabschnitte 42bb bei radial auftretenden Kräften elastisch nachgeben können. Als elastisches Material sollte vorzugsweise Kunststoff verwendet werden, aus dem zweckmäßigerweise auch der gesamte Verbindungsdübel 40 hergestellt sein sollte.

Im Bereich der umlaufenden Nut 46 besitzt der zweite Endabschnitt 42b eine zur Form der Innenwandung der Hülse 12 des ersten Distanzstückes 2 komplementäre Form. Somit entspricht auch der Außendurchmesser des zweiten Endabschnittes 42b dem Innendurchmesser der Hülse 12. Dies hat seinen Grund darin, dass der zweite Endabschnitt 42b des Verbindungsstückes 40 für einen Steckeingriff mit der Hülse 12 des ersten Distanzstückes 2 bestimmt ist, indem der zweite Endabschnitt 42b durch das freie Ende 12a in die Hülse 12 steckbar ist. Dabei gelangt die Nut 46 in Eingriff mit dem ringförmigen Fortsatz 16. Während des Einführens des zweiten Endabschnittes 42b in die Hülse 12 drückt der ringförmige Fortsatz 16 die beiden elastischen Teilabschnitte 42bb kurzzeitig zusammen, bis die Nut 46 den ringförmigen Fortsatz 16 umschließt und dabei die beiden elastischen Teilabschnitte 42bb sich wieder entspannen und beiderseits des ringförmigen Fortsatzes 16 in Anlage an die Innenwandung der Hülse 12 gelangen. Somit bildet der ringförmige Fortsatz 16 in der Hülse 12 ein erstes Arretiermittel, während die Teilabschnitte 42bb und die ringförmige Nut 46 am zweiten Endabschnitt 42b des Verbindungsdübels 40 gemeinsam ein zweites Arretiermittel bilden, welches in lösbar verrastendem Eingriff mit dem das erste Arretiermittel bildendenden ringförmigen Fortsatz 16 in der Hülse 12 bringbar ist. Wegen der elastischen Ausbildung der beiden Teilabschnitte 42bb der zweiten Endabschnitte 42b lässt sich die Verrastung mit dem ringförmigen Fortsatz 16 in der Hülse 12 wieder lösen, wenn der Verbindungsdübel 40 mit seinem zweiten Endabschnitt 42b aus dem freien Ende 12a der Hülse 12 wieder herausgezogen und somit das Verbindungsstück 40 vom ersten Distanzstück 2 wieder getrennt wird.

Wie Fig. 3 ferner erkennen lässt, ist zwischen dem ersten Endabschnitt 42a und dem zweiten Endabschnitt 42b am stift förmigen Körper 42 des Verbindungsdübels 40 ein umlaufender Kragen 52 ausgebildet, der mit einer zum ersten Endabschnitt 42a hin geneigten konischen Fläche 52a versehen ist. Diese konische Fläche 52a hat die gleiche Anordnung und Ausrichtung wie die konische Innenfläche des Randabschnittes 26a der ersten Öffnung 26 im plättchenförmigen Körper 24 des zweiten Distanzstückes 20 (vgl. Fig. 2f). Dies hat seinen Grund darin, dass die konische Fläche 52a eine Anlagefläche bildet, die in Anlage mit der konischen Innenfläche des Umfangsrandes 26a der ersten Öffnung 26 bringbar ist. Wie bereits zuvor erwähnt, ist der erste Endabschnitt 42a zur Befestigung des Verbindungsdübels 40 an einem Möbelelement bestimmt, wozu am Möbelelement eine entsprechende Bohrung vorgesehen ist, in die der erste Endabschnitt 42a gesteckt wird. Dies kann insbesondere auch unter Zwischenlage des weiteren Distanzstückes 20 stattfinden, indem der Verbindungsdübel 40 mit seinem ersten Endabschnitt 42a von der Oberseite 24a des plättchenförmigen Körpers 24 des ersten Distanzstückes 20 durch die erste Öffnung 26 in die Hülse 32 eingeführt und durch diese hindurch in eine entsprechende Bohrung gesteckt wird, in die auch die Hülse 32 hineinragt. Demnach ist in diesem Fall das zweite Distanzstück 20 an einem Möbelelement so befestigt, dass die Hülse 32 in die erwähnte Bohrung gesteckt und in der sie mit Hilfe der Rippen 34 verankert ist. Dabei dient der Kragen 52 am stiftförmigen Körper 42 des Verbindungsdübels 40 als Anschlag, indem deren konische Fläche 52a mit der konischen Innenfläche des Randabschnittes 26a der ersten Öffnung 26 im Distanzstück 20 in Anlage gelangt. Auf diese Weise wird die Eindringtiefe des ersten Endabschnittes 42a des Verbindungsdübels begrenzt und somit definiert.

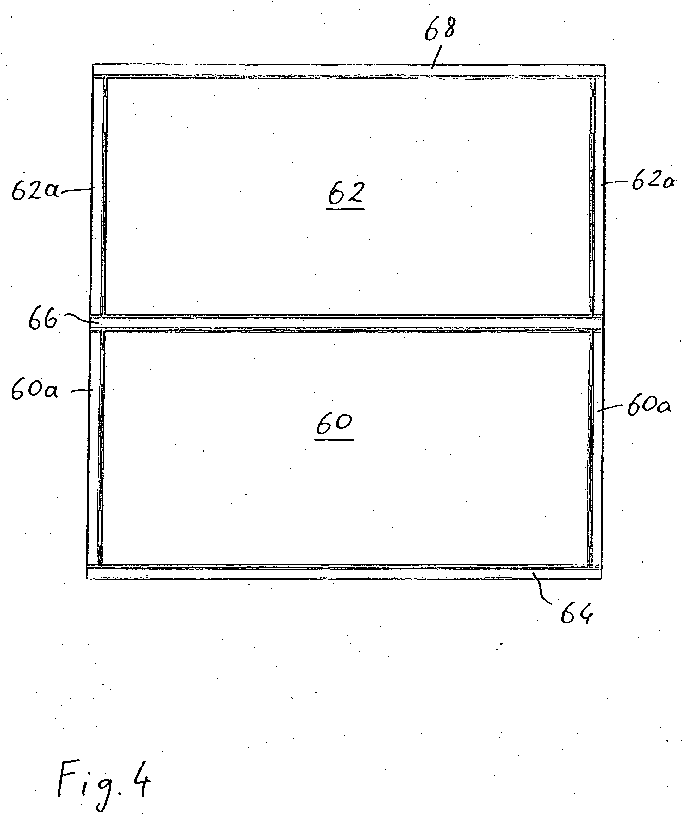

Nachfolgend wird die Verwendung der in den Figuren 1 bis 3 gezeigten Elemente für die Verbindung von Möbelelementen miteinander beispielhaft anhand einer Anordnung zweier kastenförmigen Möbelelemente unter Bezugnahme auf die Figuren 4 bis 8 näher beschrieben.

Fig. 4 zeigt eine Seitenansicht auf die Langseiten einer beispielhaften Anordnung von zwei übereinanderliegenden kastenförmigen Möbelelementen 60 und 62. Das untere Möbelelement 60 wird an seiner Unterseite von einem plattenförmigen Unterboden 64 begrenzt. Zwischen der Oberseite des unteren Möbelelementes 60 und der Unterseite des oberen Möbelelementes 62 ist ein sogenannter plattenförmiger Zwischenboden 66 angeordnet, der im montierten Zustand gleichzeitig den Oberboden des unteren Möbelelementes 60 und den Unterboden des oberen Möbelelementes 62 bildet. Ferner wird in der in Fig. 4 beispielhaft dargestellten Anordnung das obere Möbelelement 62 an seiner Oberseite von einem plattenförmigen Oberboden 68 abgeschlossen. Während in der in Fig. 4 beispielhaft dargestellten Anordnung der Unterboden 64, der Zwischenboden 66 und der Oberboden 68 horizontal angeordnet sind, sind die beiden kastenförmigen Möbelelemente 60 und 62 aus vertikal angeordneten, plattenförmigen Längs- und Seitenwänden aufgebaut, von denen in den Figuren 4 bis 8 nur die Seitenwände mit den Bezugszeichen 60a und 62a gekennzeichnet sind. Die kastenförmigen Möbelelemente 60 und 62 können beispielsweise als Schrankelemente mit in den Figuren nicht dargestellten Türen an ihrer Vorderseite oder auch einfach nur als offene Regalelemente ausgebildet sein. Es gibt auch Anwendungsfälle, in denen die Möbelelemente 60 und 62 mit Schubladen versehen sind. Grundsätzlich können die Möbelelemente 60 und 62 eine beliebige Ausstattung aufweisen.

Der Zwischenboden 66 ist in einem Abstand sowohl vom unteren Möbelelement 60 als auch vom oberen Möbelelement 62 angeordnet, so dass zwischen der Unterseite der Zwischenbodens 66 und der Oberseite des Möbelelementes 60, d.h. dem oberen Rand deren vertikaler Längswand und deren vertikaler Seitenwände 60a, sowie zwischen der Oberseite des Zwischenbodens 66 und der Unterseite des oberen Möbelelementes 62, d.h. dem unteren Rand deren vertikaler Längswand und deren vertikaler Seitenwände 62a, jeweils ein Spalt gebildet ist. Dieser Spalt weist über seine gesamte Länge eine gleiche Dicke auf. Erzeugt wird ein solcher Spalt durch den Einsatz von Distanzstücken gemäß den Figuren 1 und 2, wobei die Dicke des Spalts durch die konstante, übereinstimmende Dicke des plättchenförmigen Körpers 4 des ersten Distanzstückes 2 oder des plättchenförmigen Körpers 24 des zweiten Distanzstückes 20 bestimmt wird.

In gleicher Weise ist auch der Unterboden 64 von der Unterseite des unteren Möbelelementes 60, d.h. dem unteren Rand deren vertikaler Längswand und deren vertikaler Seitenwände 60a, und der Oberboden 68 von der Oberseite des oberen Möbelelementes, d.h. dem oberen Rand deren vertikaler Längswand und deren vertikaler Seitenwände 62a, entsprechend beabstandet. Gleiches gilt auch selbst für die Relativanordnung der vertikalen Seitenwände 60a, 62a gegenüber der jeweiligen Längswand, welche im dargestellten Ausführungsbeispiel gemeinsam das kastenförmige Möbelelement 60 bzw. 62 bilden. Die in den Figuren 1 bis 3 gezeigten Elemente lassen sich demnach nicht nur für die beabstandete Befestigung des Unterbodens 64, des Zwischenbodens 66 und des Oberbodens 68 an dem jeweiligen Möbelelement 60 bzw. 62 verwenden, sondern können selbstverständlich auch zwischen der Längswand und einer benachbarten Seitenwand 60a bzw. 62a in jedem der Möbelelemente 60 und 62 eingesetzt werden.

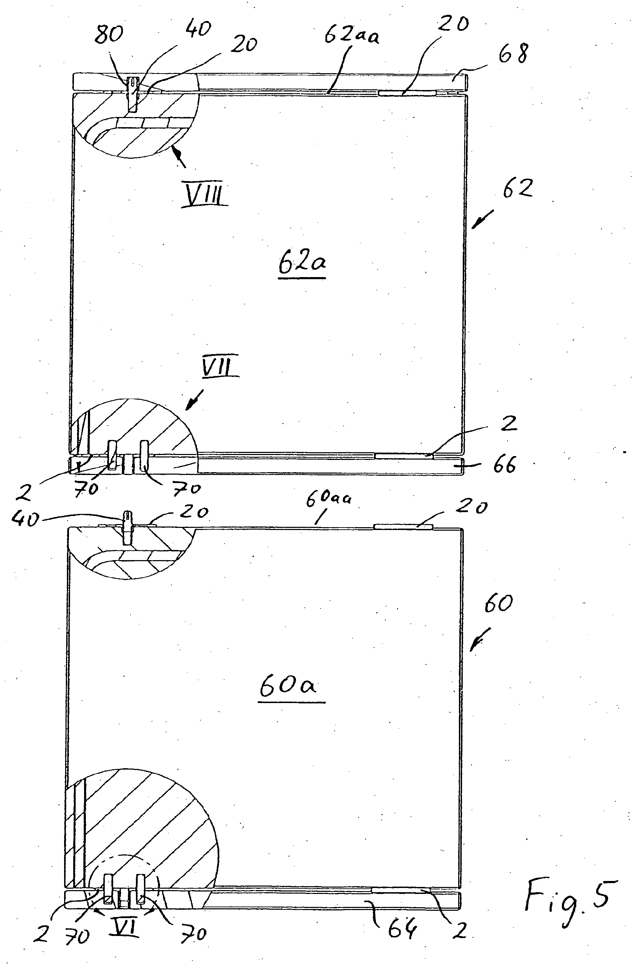

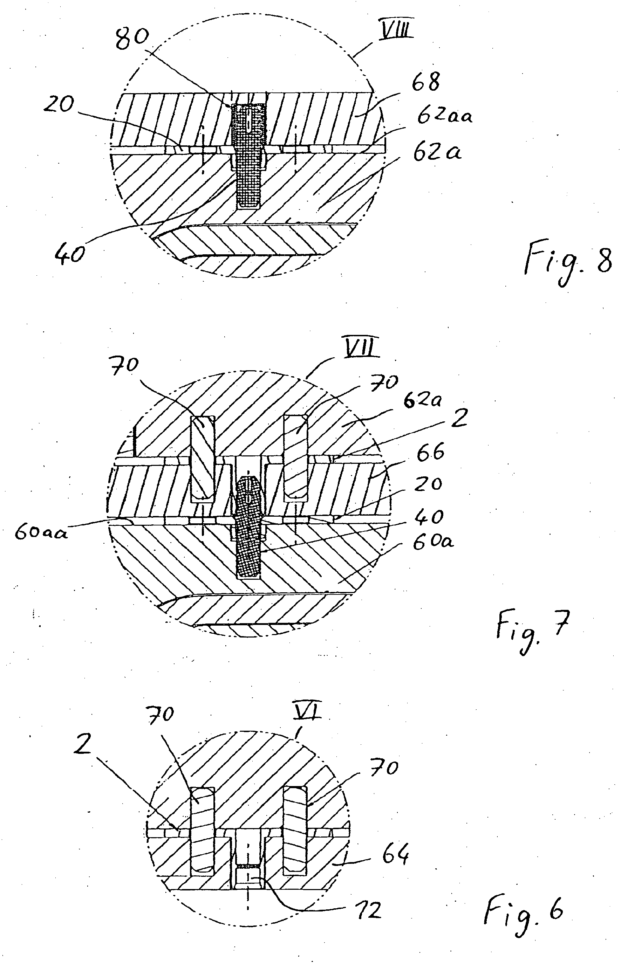

Nachfolgend wird die Verwendung der in den Figuren 1 bis 3 gezeigten Elemente am Beispiel der Befestigung des Unterbodens 64 am unteren Möbelelement 60 (Figuren 5 und 6), der Befestigung des Zwischenbodens 66 zwischen den beiden Möbelelementen 60 und 62 (Figuren 5 und 7) und der Befestigung des Oberbodens 68 auf dem oberen Möbelelement 62 (Figuren 5 und 8) näher beschrieben.

Wie Fig. 5 erkennen lässt, sind zwischen dem Unterboden 64 und dem unteren Rand der Seitenwände 60a des unteren Möbelelementes 60 Distanzstücke gemäß dem ersten Distanzstück 2 von Fig. 1, zwischen dem oberen Rand 60aa der Seitenwand 60a des unteren Möbelelementes 60 und dem Zwischenboden 66 Distanzstücke gemäß dem zweiten Distanzstück 20 von Fig. 2, zwischen dem Zwischenboden 66 und dem unteren Rand der Seitenwand 62a des oberen Möbelelementes 62 Distanzstücke gemäß dem ersten Distanzstück 2 von Fig. 1 und zwischen dem oberen Rand 62aa des oberen Möbelelementes 62 und der Unterseite des Oberbodens 68 Distanzstücke gemäß dem zweiten Distanzstück 20 von Fig. 2 angeordnet. Einzelheiten hierzu werden nachfolgend anhand der Figuren 6 bis 8 beschrieben. In diesem Zusammenhang sei ferner noch angemerkt, dass für eine lösbare Verbindung Verbindungsdübel gemäß dem Verbindungsdübel 40 von Fig. 3 eingesetzt werden, was nachfolgend ebenfalls anhand der Figuren 6 bis 8 näher erläutert wird.

Wie Fig. 5 im übrigen ferner erkennen lässt, ist aus Gründen der besseren Darstellung das untere Möbelelement 60 von dem am oberen Möbelelement 62 befestigten Zwischenboden 66 getrennt dargestellt.

Wie die Figuren 5 und 6 in Verbindung mit Fig. 1 erkennen lassen, liegt der plättchenförmige Körper 4 des ersten Distanzstückes 2 mit seiner Unterseite 4b auf der Oberseite des Unterbodens 64 auf, wobei die Hülse 12 in eine im Unterboden 64 ausgebildete und nicht näher gekennzeichnete Durchgangsbohrung steckt. Auf der Oberseite 4a des plättchenförmigen Körpers 4 des ersten Distanzstückes 2 liegt die entsprechende Seitenwand 60a des unteren Möbelelementes 60 mit ihrem unteren Rand auf. Für die Befestigung des Unterbodens 64 am unteren Möbelelement 60 sind zwei gewöhnliche Holzdübel 70 vorgesehen, die einerseits in im Unterboden 64 ausgebildete und nicht gekennzeichnete Sacklöcher und andererseits in im unteren Randabschnitt der entsprechenden Seitenwand 60a des unteren Möbelelementes 60 ausgebildete und ebenfalls in den Figuren 5 und 6 erkennbaren, jedoch nicht gekennzeichnete Sacklöcher gesteckt sind. Dabei erstrecken sich die Holzdübel 70 durch die zweite Öffnung 8 und die dritte Öffnung 10 im plättchenförmigen Körper 4 des ersten Distanzstückes 2. Hierzu müssen die zuvor erwähnten und in den Figuren nicht näher gekennzeichneten Sacklöcher zur Aufnahme der Holzdübel 70 zu der zweiten Öffnung 8 oder der dritten Öffnung 10 des ersten Distanzstückes 2 entsprechend ausgerichtet sein. Selbstverständlich müssen ferner die Sacklöcher im Unterboden 64 und in der Seitenwand 60a für die gemeinsame Aufnahme eines Holzdübels 70 jeweils miteinander entsprechend fluchten, wie Fig. 6 erkennen lässt. Die erste Öffnung 6 im plättchenförmigen Körper 4 des ersten Distanzstückes 2 bleibt bei dieser Anordnung dagegen ungenutzt, wobei die Hülse 12 als eine Art Einschlagmuffe zur Fixierung des ersten Distanzstückes 2 am Unterboden 64 dient.

Wie die Figuren 5 und 7 in Verbindung mit den Figuren 2 und 3 erkennen lassen, ist auf dem oberen Rand 60aa der entsprechenden Seitenwand 60a des unteren Möbelelementes 60 ein zweites Distanzstück 20 so befestigt, dass es mit der Unterseite 24b seines plättchenförmigen Körpers 24 auf dem oberen Rand 60aa der Seitenwand 60a aufliegt und dabei die Hülse 32 in einem im oberen Rand 60aa der Seitenwand 60 ausgebildeten und nicht gekennzeichneten Sackloch steckt und dort mit Hilfe der Rippen 34 verankert ist. Bei dieser Anordnung bleiben die zweiten und dritten Öffnungen 28 und 30 im zweiten Distanzstück 20 ungenutzt. Demgegenüber ist ein Verbindungsdübel gemäß dem besonderen Verbindungsdübel 40 von Fig. 3 mit seinem ersten Endabschnitt 42a in dasjenige Sackloch gesteckt, welches ebenfalls die Hülse 32 aufnimmt. Somit erstreckt sich der Verbindungsdübel 40 mit seinem ersten Endabschnitt 42a durch die Hülse 32 und liegt mit seinem Kragen 52 auf der Oberseite 24a des plättchenförmigen Körpers 24 des zweiten Distanzstückes 20 auf, so dass der Verbindungsdübel 40 mit seinem zweiten Endabschnitt 42b von der Oberseite 24a des plättchenförmigen Körpers 24 des zweiten Distanzstückes 20 in Richtung auf den darüber anzuordnenden Zwischenboden 66 und somit in Richtung auf das obere Möbelelement 62 emporsteht, wie Fig. 5 erkennen lässt.

Wie ferner die Figuren 5 und 7 in Verbindung mit Fig. 1 erkennen lassen, sind am Zwischenboden 66 Distanzstücke gemäß dem ersten Distanzstück von Fig. 1 in gleicher Weise wie am Unterboden 64 angeordnet und ist der Zwischenboden 66 am unteren Rand der entsprechenden Seitenwand 62a des oberen Möbelelementes 62 in gleicher Weite mit Hilfe von gewöhnlichen Holzdübeln 70 wie der Unterboden 64 an der entsprechenden Seitenwand 60a des unteren Möbelelementes 60 befestigt, so dass diesbezüglich auf die zuvor anhand von Fig. 6 gegebene Beschreibung verwiesen wird.

Da die Hülse 12 der ersten Distanzstücke 2 in einer im Zwischenboden 66 ausgebildeten und in den Figuren 5 und 7 erkennbaren, jedoch nicht gekennzeichneten Durchgangsbohrung stecken, ist ihr freies Ende 12a (Fig. 1) von der Unterseite des Zwischenbodens 66 zugänglich. Dies ist im dargestellten Ausführungsbeispiel wichtig, da die im Zwischenboden 66 sitzende Hülse 12 des ersten Distanzstückes 2 zur Aufnahme des zweiten Endabschnittes 42b des in den oberen Rand 60aa der entsprechenden Seitenwand 60a des unteren Möbelelementes 60 steckenden Verbindungsdübels 40 vorgesehen ist. Wie die Figuren 5 und 7 erkennen lassen, ist im dargestellten Ausführungsbeispiel die Dicke des Zwischenbodens 66 so gewählt, dass sie etwa der Länge der Hülse 12 des ersten Distanzstückes 2 entspricht und somit das freie Ende 12a der Hülse 12 etwa auf der Höhe der Unterseite des Zwischenbodens 66 liegt. Außerdem muss das erste Distanzstück 2 am Zwischenboden 66 zu dem jeweiligen zweiten Distanzstück 20 auf dem oberen Rand 60aa der Seitenwand 60a des unteren Möbelelementes 60 entsprechend ausgerichtet sein, um eine Verbindung zwischen dem unteren Möbelelement 60 und dem Zwischenboden 66 herzustellen, wie Fig. 5 ebenfalls erkennen lässt. Für die Herstellung der Verbindung und somit für die Befestigung mit dem Zwischenboden 66 schnappt der zweite Endabschnitt 42b des Verbindungsdübels 40 in die Hülse 12 des ersten Distanzstückes 2 am Zwischenboden 66 ein, wie in Fig. 7 gezeigt ist. Hierbei gelangt in der zuvor beschriebenen Weise die am zweiten Endabschnitt 42b des Verbindungsdübels 40 ausgebildete ringförmige Nut 46 (Fig. 3) in Eingriff mit dem ringförmigen Fortsatz 16 innerhalb der Hülse 12 des ersten Distanzstückes 2 (Fig. 1 f). Wie ebenfalls bereits zuvor beschrieben, bildet dieser Eingriff eine lösbare Arretierung, so dass sich im dargestellten Ausführungsbeispiel das obere Möbelelement 62 mit dem an seiner Unterseite befestigten Zwischenboden 66, der insoweit einen Unterboden für das obere Möbelelement 62 bildet, ohne weiteres vom unteren Möbelelement 60 wieder lösen lässt.

Wie die Fig. 5 und 8 erkennen lassen, sind im dargestellten Ausführungsbeispiel auf dem oberen Rand 62aa der entsprechenden Seitenwand 62a des oberen Möbelelementes 62 Distanzstücke gemäß dem zweiten Distanzstück 20 von Fig. 2 in gleicher Weise wie die zweiten Distanzstücke 20 auf dem oberen Rand 60aa der Seitenwand 60a des unteren Möbelelementes 60 angeordnet. Deshalb wird diesbezüglich auf die zuvor anhand von Fig. 7 gegebene Beschreibung verwiesen. In gleicher Weise ist auch hier ein Verbindungsdübel 40 mit seinem ersten Endabschnitt 42a (Fig. 3) durch die erste Öffnung 26 an der Oberseite 24a des plättchenförmigen Körpers 24 des zweiten Distanzstückes 20 und deren Hülse 32 (Fig. 2) in ein im oberen Rand 62aa der entsprechenden Seitenwand 62a des oberen Möbelelementes 62 ausgebildetes und in den Figuren 5 und 8 erkennbares, jedoch nicht gekennzeichnetes Sackloch gesteckt.

Anders als beim Zwischenboden 66 erfolgt die Befestigung des Oberbodens 68 am oberen Rand 62aa der Seitenwand 62a des oberen Möbelelementes 62 durch lösbaren Eingriff des zweiten Endabschnittes 42b des Verbindungsdübels 40 mit einer Einschlagmuffe 80, die in einem in den Figuren 5 und 8 erkennbaren, jedoch nicht gekennzeichneten Sackloch im Oberboden 68 steckt und nach unten hin geöffnet ist, um den zweiten Endabschnitt 42b des Verbindungsdübels 40 aufzunehmen, wie Fig. 8 erkennen lässt. Ein Distanzstück gemäß dem ersten Distanzstück 2 findet somit hier keine Verwendung. Dies ist nicht erforderlich und auch nicht gewünscht, da der Oberboden 68 den oberen Abschluss der aus dem Möbelelementen 60 und 62 zusammengesetzten Möbelanordnung bildet. Dabei wäre die Anordnung eines Distanzstückes auf der freien Oberseite des Oberbodens 68 nur störend.

An dieser Stelle sei der guten Vollständigkeit halber angemerkt, dass die beispielhaft in den Figuren 5 bis 8 dargestellten Verbindungsmöglichkeiten auch an anderer Stelle der Möbelelemente 60 und 62, z.B. für die Verbindung einer Seitenwand 60a mit einer im einzelnen nicht näher bezeichneten Längswand, und auch in anderer Ausrichtung wahlweise eingesetzt werden können.

Die zuvor anhand der Figuren 5 bis 8 beispielhaft beschriebene Verwendung der in den Figuren 1 bis 3 gezeigten Elemente lässt erkennen, dass für jene. Elemente unterschiedliche Einsatzzwecke möglich sind. Dies trifft insbesondere auf die ersten und zweiten Distanzstücke 2 und 20 in Bezug auf deren Verwendung in Verbindung mit dem Verbindungsdübel 40 oder den Holzdübeln 70 zu. In dem in Fig. 6 dargestellten Fall bleibt die mittlere erste Öffnung 6 in einem ersten Distanzstück 2 unbenutzt und dessen Hülse 12 leer, während jene Hülse 12 in dem in Fig. 7 dargestellten Fall zur lösbaren Arretierung des Verbindungsdübels 40 dient. Grundsätzlich ist es aber auch denkbar, jene Hülse 12 im ersten Distanzstück 2 zur Aufnahme eines gewöhnlichen Holzdübels 70 oder zur Aufnahme eines Verbindungsdübels 40 nicht durch deren freies Ende 12a, sondern durch die erste Öffnung 6 zu verwenden. Demgegenüber bleiben in den in den Figuren 7 und 8 dargestellten Fällen die beiden äußeren (zweiten und dritten) Öffnungen 28 und 30 des zweiten Distanzstückes 20 ungenutzt, wobei es aber auch denkbar ist, diese ebenfalls zusätzlich oder ausschließlich für die Aufnahme von Holzdübeln 70 zu verwenden. In diesem Zusammenhang sei ferner angemerkt, dass anstelle der beschriebenen Verbindungsdübel 40 und Holzdübel 70 grundsätzlich auch Verbindungsstücke mit einer anderen Konstruktion eingesetzt werden können, wobei eine Konstruktion mit einem stiftförmigen Körper für die dargestellten Ausführungsbeispiele bevorzugt werden sollten.

In dem in den Figuren 4 und 5 gezeigten Ausführungsbeispiel findet eine Verbindung der kastenförmigen Möbelelemente 60 und 62 über einen Zwischenboden 66 statt, der als Unterboden am oberen Möbelelement 62 befestigt ist und gleichzeitig als Oberboden für das untere Möbelelement 60 dient. Somit werden die in den Figuren 1 bis 3 gezeigten Elemente im dargestellten Ausführungsbeispiel nicht für eine direkte Verbindung zwischen den beiden kastenförmigen Möbelelementen 60 und 62 verwendet, sondern für eine beabstandete Anordnung sowohl des unteren Möbelelementes 60 als auch des oberen Möbelelementes 62 jeweils vom Zwischenboden 66. Ferner werden die in den Figuren 1 bis 3 gezeigten Elemente für eine beabstandete Anordnung des Unterbodens 64 vom unteren kastenförmigen Möbelelement 60 und des Oberbodens 68 vom oberen kastenförmigen Möbelelement 62 verwendet. Insoweit können auch der Unterboden 64, der Zwischenboden 66 und der Oberboden 68 jeweils als plattenförmige Möbelelemente betrachtet werden. Gleiches gilt selbstverständlich auch für die vertikalen Seitenwände 60a, 62a und die in den Figuren nicht näher bezeichneten Längswände, aus denen im dargestellten Ausführungsbeispiel die kastenförmigen Möbelelemente 60 und 62 zusammengesetzt sind..

## Patentansprüche

1. Möbeldistanzvorrichtung zur Erzielung eines Abstandes zwischen zwei miteinander verbindbaren Möbelelementen (60, 60a, 62, 62a, 64, 66, 68), mit mindestens einem Distanzstück (2) und mit mindestens einem Verbindungsstück (40) zur Verbindung der beiden Möbelelemente (60, 60a, 62, 62a, 64, 66, 68) miteinander, wobei das Distanzstück (2) an dem einen Möbelelement befestigbar ist, einen plättchenförmigen Körper (4) aufweist, der zwischen die beiden Möbelelemente derart positionierbar ist, dass das eine Möbelelement an der einen Seite und das andere Möbelelement an der gegenüberliegenden anderen Seite des plättchenförmigen Körpers (4) anliegt, mindestens eine Aussparung oder Öffnung (6, 8, 10) zur Aufnahme des mindestens einen die beiden Möbelelemente miteinander verbindenden Verbindungsstückes (40) und ein erstes Arretiermittel (16) aufweist, und das Verbindungsstück (40) an dem anderen Möbelelement befestigbar ist und ein zweites Arretiermittel ( 46) aufweist, das mit dem ersten Arretiermittel am Distanzstück (2) lösbar in Eingriff bringbar ist.

2. Vorrichtung nach Anspruch 1,
**dadurch gekennzeichnet, dass** das Distanzstück (2) einen vom plättchenförmigen Körper (4) abstehenden Fortsatz (12) aufweist, der für einen Eingriff mit mindestens einem der beiden Möbelelemente (60a, 62a, 64, 66) vorgesehen ist.

3. Vorrichtung nach Anspruch 2,
**dadurch gekennzeichnet, dass** der Fortsatz (12) nur an einer Seite (4b) des plättchenförmigen Körpers (4) des Distanzstückes (2) angeordnet ist.

4. Vorrichtung nach Anspruch 2 oder 3,
**dadurch gekennzeichnet, dass** der Fortsatz (12) so ausgebildet ist, dass er mit seinem freien Ende in ein in dem Möbelelement ausgebildetes Loch steckbar ist.

5. Vorrichtung nach mindestens einem der Ansprüche 2 bis 4,
**dadurch gekennzeichnet, dass** der Fortsatz (12) an seiner Außenseite mit Fixier- oder Arretiermitteln (14) wie insbesondere einer Rändelung versehen ist.

6. Vorrichtung nach mindestens einem der Ansprüche 2 bis 5,
**dadurch gekennzeichnet, dass** der Fortsatz (12) als Hülse ausgebildet ist, die die mindestens eine Öffnung (6) umgibt.

7. Vorrichtung nach mindestens einem der vorangegangenen Ansprüche,
**dadurch gekennzeichnet, dass** die mindestens eine Öffnung (8, 10) als Bohrung ausgebildet ist, durch die ein stiftförmiges Verbindungsstück (40, 70) steckbar ist, dessen einer Endabschnitt mit dem einen Möbelelement und dessen anderer Endabschnitt mit dem anderen Möbelelement in Eingriff bringbar und vorzugsweise in ein jeweils dort ausgebildetes Sackloch steckbar ist.

8. Vorrichtung nach mindestens einem der Ansprüche 3 bis 7,
**dadurch gekennzeichnet, dass** der Fortsatz (12) das erste Arretiermittel (16) aufweist.

9. Vorrichtung nach den Ansprüchen 6 und 8,
**dadurch gekennzeichnet, dass** das erste Arretiermittel (16) in der Hülse (12) ausgebildet ist.

10. Vorrichtung nach mindestens einem der vorangegangenen Ansprüche,
**dadurch gekennzeichnet, dass** die ersten und zweiten Arretiermittel (16, 46) gemeinsam eine Rasteinrichtung bilden.

11. Vorrichtung nach mindestens einem der vorangegangenen Ansprüche,
**dadurch gekennzeichnet, dass** das erste Arretiermittel (16) in der mindestens einen Aussparung oder Öffnung (6) ausgebildet oder durch diese selbst gebildet ist.

12. Vorrichtung nach mindestens einem der vorangegangenen Ansprüche,
**dadurch gekennzeichnet, dass** das Verbindungsstück (40) einen stiftförmigen Körper (42) mit einem ersten Endabschnitt (42a) und einem zweiten Endabschnitt (42b) aufweist, mit dem ersten Endabschnitt (42a) in ein in dem anderen Möbelelement ausgebildetes Loch, vorzugsweise Sackloch, steckbar ist und am zweiten Endabschnitt (42b) mit dem zweiten Arretiermittel (46) versehen ist.

13. Vorrichtung nach Anspruch 12,
**dadurch gekennzeichnet, dass** der erste Endabschnitt (42a) einen geschuppten Abschnitt (44) aufweist.

14. Vorrichtung nach mindestens einem der Ansprüche 12 oder 13,
**dadurch gekennzeichnet, dass** der zweite Endabschnitt (42b) im Bereich des zweiten Arretiermittels (46) im wesentlichen in radialer Richtung elastisch deformierbar ist.

15. Vorrichtung nach Anspruch 14,
**dadurch gekennzeichnet, dass** der zweite Endabschnitt (42b) mindestens zwei radial voneinander beabstandete und im wesentlichen in radialer Richtung elastisch verbiegbare Abschnitte (42bb) aufweist, welche das zweite Arretiermittel (46) oder zumindest Teile des zweiten Arretiermittels bilden.

16. Vorrichtung nach Anspruch 15,
**dadurch gekennzeichnet, dass** die mindestens zwei Abschnitte (42bb) des zweiten Endabschnittes (42b) durch einen Spalt oder Schlitz (48) voneinander getrennt sind.

17. Vorrichtung nach Anspruch 9 oder 11 sowie nach mindestens einem der Ansprüche 12 bis 16,
**dadurch gekennzeichnet, dass** das Verbindungsstück (40) mit seinem zweiten Endabschnitt (42b) durch eine zugehörige, im plättchenförmigen Körper (4) des Distanzstückes (2) ausgebildete Öffnung steckbar ist.

18. Vorrichtung nach den Ansprüchen 6 und 17,
**dadurch gekennzeichnet, dass** das Verbindungsstück (40) mit seinem zweiten Endabschnitt (42b) in das freie Ende der am plättchenförmigen Körper (4) angeordneten Hülse (12) einführbar ist.

19. Vorrichtung nach Anspruch 18, mit mindestens einem ersten Distanzstück (2) und einem zweiten Distanzstück (20),
**dadurch gekennzeichnet, dass** das erste Distanzstück (2) mit seiner Hülse (12) in eine Durchgangsbohrung in dem einen Möbelteil (66) und das zweite Distanzstück (20) mit seiner Hülse (32) in eine Bohrung steckbar, die in einem dem einen Möbelteil (66) benachbarten Abschnitt (60aa) des anderen Möbelteils (60a) ausgebildet ist, bei Verbindung der beiden Möbelteile (60a, 66) miteinander das freie Ende (12a) der Hülse (12) des ersten Distanzstückes (2) benachbart zum zweiten Distanzstück (20) und das erste Distanzstück (2) an einer von dem anderen Möbelteil (60a) entfernt gelegenen Seite des Abschnittes des einen Möbelteils (66) positionierbar und das Verbindungsstück (40) mit seinem ersten Endabschnitt (42a) durch die Hülse (32) des zweiten Distanzstückes (20) hindurch steckbar und mit seinem zweiten Endabschnitt (42b) in das freie Ende der Hülse (12) des ersten Distanzstückes (2) einführbar ist.

20. Vorrichtung nach Ansprüch 19.
**dadurch gekennzeichnet, dass** das Verbindungsstück (40) mit seinem ersten Endabschnitt (42a) durch die Öffnung (26) in die an der gegenüberliegenden Seite (26b) des plättchenförmigen Körpers (24) angeordnete Hülse (32) einführbar ist.

21. Vorrichtung nach Anspruch 9 oder 11 sowie nach mindestens einem der Ansprüche 12 bis 20,
**dadurch gekennzeichnet, dass** das erste Arretiermittel einen flanschartigen, ringförmigen Vorsprung (16) und das zweite Arretiermittel eine ringförmig umlaufende Nut (46) aufweist.

22. Vorrichtung nach mindestens einem der Ansprüche 19 bis 21,
**dadurch gekennzeichnet, dass** das Verbindungsstück (40) ein mit dem plättchenförmigen Körper (24) eines Distanzstückes (20) benachbart zur Öffnung (26) in Anlage bringbares Stützmittel (52) aufweist.

23. Vorrichtung nach Anspruch 22,
**dadurch gekennzeichnet, dass** das Stützmittel (52) als seitlicher Vorsprung oder Kragen ausgebildet ist.

24. Vorrichtung nach einem der Ansprüche 22 oder 23,
**dadurch gekennzeichnet, dass** das Stützmittel einen umlaufenden, flanschartigen Kragen (52) bildet.

25. Vorrichtung nach Anspruch 24,
**dadurch gekennzeichnet, dass** der Kragen (52) eine sich in Richtung auf den ersten Endabschnitt (42a) des Verbindungsstückes (40) verjüngende konische Außenfläche (52a) und ein in eine Oberfläche (24a) des plättchenförmigen Körpers (24) des Distanzstückes (20) mündender Randabschnitt (26a) der zugehörigen Öffnung (26) eine sich nach außen erweiternde konische Innenfläche aufweist und die konische Außenfläche (52a) des Kragens (52) und die konische Innenfläche des Randabschnittes (26a) der Öffnung (26) so zueinander ausgerichtet sind, dass sie im wesentlichen in gegenseitige Anlage aneinander bringbar sind.

26. Vorrichtung nach Anspruch 12 sowie nach mindestens einem der Ansprüche 22 bis 25,
**dadurch gekennzeichnet, dass** das Stützmittel (52) zwischen dem ersten und
dem zweiten Endabschnitt (42a, 42b) angeordnet ist.

27. Vorrichtung nach mindestens einem der vorangegangenen Ansprüche, **dadurch gekennzeichnet, dass** der plättchenförmige Körper (4, 24) des Distanzstückes (2; 20) eine erste Öffnung (6; 26) zur Aufnahme eines ersten Verbindungsstückes (40) und mindestens eine zweite Öffnung (8; 28) zur Aufnahme eines zweiten Verbindungsstückes (70) gemäß Anspruch 7 aufweist.

28. Vorrichtung nach Anspruch 27,
**dadurch gekennzeichnet, dass** die zweite Öffnung (8; 28) zur Aufnahme eines als zweites Verbindungsstück vorgesehenen Holzdübels (70) ausgebildet ist.

29. Vorrichtung nach Anspruch 27 oder 28,
**dadurch gekennzeichnet, dass** der plättchenförmige Körper (4; 24) des Distanzstückes (2; 20) mindestens eine dritte Öffnung (10; 30) zur Aufnahme eines dritten Verbindungsstückes (70) gemäß Anspruch 7 aufweist.

30. Vorrichtung nach Anspruch 29,
**dadurch gekennzeichnet, dass** die dritte Öffnung (10; 30) zur Aufnahme eines als zweites Verbindungsstück vorgesehenen Holzdübels (70) ausgebildet ist.

31. Vorrichtung nach Anspruch 29 oder 30.
**dadurch gekennzeichnet, dass** die erste Öffnung (6; 26) zwischen der zweiten Öffnung (8; 28) und der dritten Öffnung (10; 30) liegt.

32. Vorrichtung nach mindestens einem der vorangegangenen Ansprüche, **dadurch gekennzeichnet, dass** der plättchenförmige Körper (4; 24) des Distanzstückes (2; 20) eine definierte konstante Dicke aufweist.

33. Vorrichtung nach mindestens einem der vorangegangenen Ansprüche, **dadurch gekennzeichnet, dass** der plättchenförmige Körper (4; 24) des Distanzstückes (2; 20) eine Rechteckform aufweist.

34. Vorrichtung nach mindestens einem der vorangegangenen Ansprüche, **dadurch gekennzeichnet, dass** mindestens ein Seitenrand (4c, 4d; 24c, 24d) des plättchenförmigen Körpers (4; 24) als an mindestens einer Seite überstehender flanschartiger Rand (5; 25) ausgebildet ist.

35. Vorrichtung nach Anspruch 34,
**dadurch gekennzeichnet, dass** der flanschartige Rand (5; 25) mindestens entlang einer Langseite (4c, 4d; 24c, 24d) des plättchenförmigen Körpers (4; 24) ausgebildet ist.

## Claims

1. Furniture-spacing device for establishing a distance between two interconnectable furniture elements (60, 60a, 62, 62a, 64, 66, 68), having at least one spacing piece (2) and having at least one connecting piece (40) for connecting the two furniture elements (60, 60a, 62, 62a, 64, 66, 68) to one another, wherein the spacing piece (2) can be fastened on the one furniture element and has a plate-like body (4), which can be positioned between the two furniture elements such that the one furniture element butts against the one side, and the other furniture element butts against the other, opposite, side of the plate-like body (4), and also has at least one aperture or opening (6, 8, 10), for accommodating the at least one connecting piece (40) connecting the two furniture elements to one another, and a first arresting means (16), and the connecting piece (40) can be fastened on the other furniture element and has a second arresting means (46), which can be brought into releasable engagement with the first arresting means on the spacing piece (2).

2. Device according to Claim 1,
**characterized in that** the spacing piece (2) has an extension (12), which projects from the plate-like body (4) and is provided for engagement with at least one of the two furniture elements (60a, 62a, 64, 66).

3. Device according to Claim 2,
**characterized in that** the extension (12) is arranged only on one side (4b) of the plate-like body (4) of the spacing piece (2).

4. Device according to Claim 2 or 3,
**characterized in that** the extension (12) is designed such that it can have its free end inserted into a hole formed in the furniture element.

5. Device according to at least one of Claims 2 to 4, **characterized in that** the extension (12) is provided, on its outer side, with fixing or arresting means (14) such as, in particular, a knurled formation.

6. Device according to at least one of Claims 2 to 5, **characterized in that** the extension (12) is designed in the form of a sleeve which encloses the at least one opening (6).

7. Device according to at least one of the preceding claims,
**characterized in that** the at least one opening (8, 10) is designed in the form of a bore through which can be inserted a pin-like connecting piece (40, 70), of which the one end portion can be brought into engagement with the one furniture element and the other end portion can be brought into engagement with the other furniture element, and preferably can be inserted into a blind hole formed in each of these furniture elements.

8. Device according to at least one of Claims 3 to 7, **characterized in that** the extension (12) has the first arresting means (16).

9. Device according to Claims 6 and 8,
**characterized in that** the first arresting means (16) is formed in the sleeve (12).

10. Device according to at least one of the preceding claims,
**characterized in that** the first and second arresting means (16, 46) together form a latching mechanism.

11. Device according to at least one of the preceding claims,
**characterized in that** the first arresting means (16) is formed in the at least one aperture or opening (6), or is formed by said aperture or opening itself.

12. Device according to at least one of the preceding claims,
**characterized in that** the connecting piece (40) has a pin-like body (42) with a first end portion (42a) and a second end portion (42b), can have the first end portion (42a) inserted into a hole, preferably blind hole, formed in the other furniture element, and is provided with the second arresting means (46) on the second end portion (42b).

13. Device according to Claim 12,
**characterized in that** the first end portion (42a) has a shingled-formation portion (44).

14. Device according to at least one of Claims 12 and 13,
**characterized in that** the second end portion (42b) can be elastically deformed essentially in the radial direction in the region of the second arresting means (46).

15. Device according to Claim 14,
**characterized in that** the second end portion (42b) has at least two radially spaced-apart and essentially radially elastically flexible portions (42bb), which form the second arresting means (46) or at least parts of the second arresting means.

16. Device according to Claim 15,
**characterized in that** the at least two portions (42bb) of the second end portion (42b) are separated from one another by a gap or slit (48).

17. Device according to Claim 9 or 11 and according to at least one of Claims 12 to 16,
**characterized in that** the connecting piece (40) can have its second end portion (42b) inserted through an associated opening formed in the plate-like body (4) of the spacing piece (2).

18. Device according to Claims 6 and 17,
**characterized in that** the connecting piece (40) can have its second end portion (42b) introduced into the free end of the sleeve (12) arranged on the plate-like body (4).

19. Device according to Claim 18, having at least a first spacing piece (2) and a second spacing piece (20),
**characterized in that** the first spacing piece (2) can have its sleeve (12) inserted into a through-passage bore in the one furniture part (66) and the second spacing piece (20) can have its sleeve (32) inserted into a bore which is formed in a portion (60aa) of the other furniture part (60a), said portion (60aa) being adjacent to the one furniture part (66), when the two furniture parts (60a, 66) are connected to one another the free end (12a) of the sleeve (12) of the first spacing piece (2) can be positioned adjacent to the second spacing piece (20), and the first spacing piece (2) can be positioned on a side of the portion of the one furniture part (66) which is remote from the other furniture part (60a), and the connecting piece (40) can have its first end portion (42a) inserted through the sleeve (32) of the second spacing piece (20) and can have its second end portion (42b) introduced into the free end of the sleeve (12) of the first spacing piece (2).

20. Device according to Claim 19,
**characterized in that** the connecting piece (40) can have its first end portion (42a) introduced through the opening (26) into the sleeve (32) arranged on the opposite side (26b) of the plate-like body (24).

21. Device according to Claim 9 or 11 and according to at least one of Claims 12 to 20,
**characterized in that** the first arresting means has a flange-like, annular protrusion (16) and the second arresting means has an annularly encircling groove (46).

22. Device according to at least one of Claims 19 to 21,
**characterized in that** the connecting piece (40) has a supporting means (52) which can be brought into abutment with the plate-like body (24) of a spacing piece (20) adjacent to the opening (26).

23. Device according to Claim 22,
**characterized in that** the supporting means (52) is designed in the form of a lateral protrusion or collar.

24. Device according to either of Claims 22 and 23, **characterized in that** the supporting means forms an encircling, flange-like collar (52).

25. Device according to Claim 24,
**characterized in that** the collar (52) has a conical outer surface (52a), which tapers in the direction of the first end portion (42a) of the connecting piece (40), and a peripheral portion (26a) of the associated opening (26), said peripheral portion opening out into a surface (24a) of the plate-like body (24) of the spacing piece (20), has an outwardly winding and conical inner surface, and the conical outer surface (52a) of the collar (52) and the conical inner surface of the peripheral portion (26a) of the opening (26) are aligned with one another such that they can be brought essentially into mutual abutment against one another.

26. Device according to Claim 12 and according to at least one of Claims 22 to 25,
**characterized in that** the supporting means (52) is arranged between the first and the second end portions (42a, 42b).

27. Device according to at least one of the preceding claims,
**characterized in that** the plate-like body (4, 24) of the spacing piece (2; 20) has a first opening (6; 26) for accommodating a first connecting piece (40) and at least a second opening (8; 28) for accommodating a second connecting piece (70) according to Claim 7.

28. Device according to Claim 27,
**characterized in that** the second opening (8; 28) is designed for accommodating a wooden dowel (70) provided in the form of a second connecting piece.

29. Device according to Claim 27 or 28,
**characterized in that** the plate-like body (4; 24) of the spacing piece (2; 20) has at least a third opening (10; 30) for accommodating a third connecting piece (70) according to Claim 7.

30. Device according to Claim 29,
**characterized in that** the third opening (10; 30) is designed for accommodating a wooden dowel (70) provided in the form of a second connecting piece.

31. Device according to Claim 29 or 30,
**characterized in that** the first opening (6; 26) is located between the second opening (8; 28) and the third opening (10; 30).

32. Device according to at least one of the preceding claims,
**characterized in that** the plate-like body (4; 24) of the spacing piece (2; 20) has a defined constant thickness.

33. Device according to at least one of the preceding claims,
**characterized in that** the plate-like body (4; 24) of the spacing piece (2; 20) is rectangular.

34. Device according to at least one of the preceding claims,
**characterized in that** at least one side periphery (4c, 4d; 24c, 24d) of the plate-like body (4; 24) is designed in the form of a flange-like periphery (5; 25) projecting on at least one side.

35. Device according to Claim 34,
**characterized in that** the flange-like periphery (5; 25) is formed at least along a long side (4c, 4d; 24c, 24d) of the plate-like body (4; 24).

## Revendications

1. Dispositif d'espacement d'un meuble pour produire un espacement entre deux éléments de meuble (60, 60a, 62, 62a, 64, 66, 68) pouvant être connectés l'un à l'autre, comprenant au moins un élément d'espacement (2) et au moins une pièce de connexion (40) pour la connexion des deux éléments de meuble (60, 60a, 62, 62a, 64, 66, 68) l'un à l'autre,
la pièce d'espacement (2) pouvant être fixée à l'un des éléments de meuble, présentant un corps en forme de plaquette (4) qui peut être positionné entre les deux éléments de meuble de telle sorte que l'un des éléments de meuble s'applique contre un côté et l'autre élément de meuble s'applique contre l'autre côté opposé du corps en forme de plaquette (4), présentant au moins un évidement ou une ouverture (6, 8, 10) pour recevoir l'au moins une pièce de connexion (40) connectant l'un à l'autre les deux éléments de meuble et un premier moyen de blocage (16), et la pièce de connexion (40) pouvant être fixée à l'autre élément de meuble et présentant un deuxième moyen de blocage (46) qui peut être amené en prise de manière amovible avec le premier moyen de blocage sur la pièce d'espacement (2).

2. Dispositif selon la revendication 1,
**caractérisé en ce que** la pièce d'espacement (2) présente une saillie (12) faisant saillie depuis le corps en forme de plaquette (4), laquelle est prévue pour s'engager avec au moins l'un des deux éléments de meuble (60a, 62a, 64, 66).

3. Dispositif selon la revendication 2,
**caractérisé en ce que** la saillie (12) est disposée seulement au niveau d'un côté (4b) du corps en forme de plaquette (4) de la pièce d'espacement (2).

4. Dispositif selon la revendication 2 ou 3,
**caractérisé en ce que** la saillie (12) est réalisée de telle sorte qu'elle puisse être enfichée avec son extrémité libre dans un trou réalisé dans l'élément de meuble.

5. Dispositif selon au moins l'une quelconque des revendications 2 à 4,
**caractérisé en ce que** la saillie (12) est pourvue au niveau de son côté extérieur de moyens de fixation ou de blocage (14) tels que par exemple un moletage.

6. Dispositif selon au moins l'une quelconque des revendications 2 à 5,
**caractérisé en ce que** la saillie (12) est réalisée sous forme de douille qui entoure l'au moins une ouverture (6).

7. Dispositif selon au moins l'une quelconque des revendications précédentes,
**caractérisé en ce que** l'au moins une ouverture (8, 10) est réalisée sous forme d'alésage à travers lequel peut être enfichée une pièce de connexion en forme de goupille (40, 70) dont une portion d'extrémité peut être amenée en prise avec l'un des éléments de meuble et dont l'autre portion d'extrémité peut être amenée en prise avec l'autre élément de meuble et qui peut être enfichée de préférence dans un trou borgne réalisé à chaque fois à cet endroit.

8. Dispositif selon au moins l'une quelconque des revendications 3 à 7,
**caractérisé en ce que** la saillie (12) présente le premier moyen de blocage (16).

9. Dispositif selon les revendications 6 et 8,
**caractérisé en ce que** le premier moyen de blocage (16) est réalisé dans la douille (12).

10. Dispositif selon au moins l'une quelconque des revendications précédentes,
**caractérisé en ce que** les premier et deuxième moyens de blocage (16, 46) forment ensemble un dispositif d'encliquetage.

11. Dispositif selon au moins l'une quelconque des revendications précédentes,
**caractérisé en ce que** le premier moyen de blocage (16) est réalisé dans l'au moins un évidement ou l'au moins une ouverture (6) ou est formé par celui ou celle-ci.

12. Dispositif selon au moins l'une quelconque des revendications précédentes,
**caractérisé en ce que** la pièce de connexion (40) présente un corps en forme de goupille (42) avec une première portion d'extrémité (42a) et une deuxième portion d'extrémité (42b), peut être enfichée avec la première portion d'extrémité (42a) dans un trou, de préférence un trou borgne, réalisé dans l'autre élément de meuble, et est pourvue au niveau de la deuxième portion d'extrémité (42b) du deuxième moyen de blocage (46).

13. Dispositif selon la revendication 12,
**caractérisé en ce que** la première portion d'extrémité (42a) présente une portion à chevauchement (44).

14. Dispositif selon au moins l'une quelconque des revendications 12 ou 13,
**caractérisé en ce que** la deuxième portion d'extrémité (42b) peut être déformée élastiquement dans la région du deuxième moyen de blocage (46) essentiellement dans la direction radiale.

15. Dispositif selon la revendication 14,
**caractérisé en ce que** la deuxième portion d'extrémité (42b) présente au moins deux portions (42bb) espacées radialement l'une de l'autre et pouvant être courbées élastiquement essentiellement dans la direction radiale, qui forment le deuxième moyen de blocage (46) ou au moins des parties du deuxième moyen de blocage.

16. Dispositif selon la revendication 15,
**caractérisé en ce que** les au moins deux portions (42bb) de la deuxième portion d'extrémité (42b) sont séparées l'une de l'autre par un interstice ou une fente (48).

17. Dispositif selon la revendication 9 ou 11, ainsi que selon au moins l'une quelconque des revendications 12 à 16,
**caractérisé en ce que** la pièce de connexion (40) peut être enfichée avec sa deuxième portion d'extrémité (42b) au travers d'une ouverture associée, réalisée dans le corps en forme de plaquette (4) de la pièce d'espacement (2).

18. Dispositif selon les revendications 6 et 17, **caractérisé en ce que** la pièce de connexion (40) peut être introduite avec sa deuxième portion d'extrémité (42b) dans l'extrémité libre de la douille (12) disposée sur le corps en forme de plaquette (4).

19. Dispositif selon la revendication 18, comprenant au moins une première pièce d'espacement (2) et une deuxième pièce d'espacement (20),
**caractérisé en ce que** la première pièce d'espacement (2) peut être enfichée avec sa douille (12) dans un alésage traversant dans l'une des parties de meuble (66) et la deuxième pièce d'espacement (20) peut être enfichée avec sa douille (32) dans un alésage qui est réalisé dans une portion (60aa) de l'autre partie de meuble (60a) adjacente à l'une des parties de meuble (66), lors de la connexion des deux parties de meuble (60a, 66) l'une à l'autre, l'extrémité libre (12a) de la douille (12) de la première pièce d'espacement (2) peut être positionnée en position adjacente à la deuxième pièce d'espacement (20) et la première pièce d'espacement (2) peut être positionnée au niveau d'un côté de la portion de l'une des parties de meuble (66) situé à distance de l'autre partie de meuble (60a) et la pièce de connexion (40) peut être enfichée avec sa première portion d'extrémité (42a) à travers la douille (32) de la deuxième pièce d'espacement (20) et peut être introduite avec sa deuxième portion d'extrémité (42b) dans l'extrémité libre de la douille (12) de la première pièce d'espacement (2).

20. Dispositif selon la revendication 19,
**caractérisé en ce que** la pièce de connexion (40) peut être introduite avec sa première portion d'extrémité (42a) à travers l'ouverture (26) dans la douille (32) disposée au niveau du côté opposé (26b) du corps en forme de plaquette (24).

21. Dispositif selon la revendication 9 ou 11, ainsi que selon au moins l'une quelconque des revendications 12 à 20,
**caractérisé en ce que** le premier moyen de blocage présente une saillie de type bride, de forme annulaire (16), et le deuxième moyen de blocage présente une rainure périphérique de forme annulaire (46).

22. Dispositif selon au moins l'une quelconque des revendications 19 à 21,
**caractérisé en ce que** la pièce de connexion (40) présente un moyen de support (52) pouvant être amené en appui avec le corps en forme de plaquette (24) d'une pièce d'espacement (20) à côté de l'ouverture (26).

23. Dispositif selon la revendication 22,
**caractérisé en ce que** le moyen de support (52) est réalisé sous forme de saillie ou de col latéral.

24. Dispositif selon l'une quelconque des revendications 22 ou 23,
**caractérisé en ce que** le moyen de support forme un col périphérique de type bride (52).

25. Dispositif selon la revendication 24,
**caractérisé en ce que** le col (52) présente une surface extérieure conique (52a) se rétrécissant dans la direction de la première portion d'extrémité (42a) de la pièce de connexion (40) et une portion de bord (26a) de l'ouverture associée (26) débouchant dans une surface (24a) du corps en forme de plaquette (24) de la pièce d'espacement (20) présente une surface intérieure conique s'élargissant vers l'extérieur et la surface extérieure conique (52a) du col (52) et la surface intérieure conique de la portion de bord (26a) de l'ouverture (26) sont orientées l'une vers l'autre de telle sorte qu'elles puissent essentiellement être amenées en appui l'une contre l'autre.

26. Dispositif selon la revendication 12 et selon au moins l'une quelconque des revendications 22 à 25, **caractérisé en ce que** le moyen de support (52) est disposé entre la première et la deuxième portion d'extrémité (42a, 42b).

27. Dispositif selon au moins l'une quelconque des revendications précédentes,
**caractérisé en ce que** le corps en forme de plaquette (4, 24) de la pièce d'espacement (2 ; 20) présente une première ouverture (6 ; 26) pour recevoir une première pièce de connexion (40) et au moins une deuxième ouverture (8 ; 28) pour recevoir une deuxième pièce de connexion (70) selon la revendication 7.

28. Dispositif selon la revendication 27,
**caractérisé en ce que** la deuxième ouverture (8 ; 28) est réalisée de manière à recevoir une cheville à bois (70) prévue en tant que deuxième pièce de connexion.

29. Dispositif selon la revendication 27 ou 28, **caractérisé en ce que** le corps en forme de plaquette (4 ; 24) de la pièce d'espacement (2 ; 20) présente au moins une troisième ouverture (10 ; 30) pour recevoir une troisième pièce de connexion (70) selon la revendication 7.

30. Dispositif selon la revendication 29,
**caractérisé en ce que** la troisième ouverture (10 ; 30) est réalisée pour recevoir une cheville à bois (70) prévue en tant que deuxième pièce de connexion.

31. Dispositif selon la revendication 29 ou 30,
**caractérisé en ce que** la première ouverture (6 ; 26) est située entre la deuxième ouverture (8 ; 28) et la troisième ouverture (10 ; 30).

32. Dispositif selon au moins l'une quelconque des revendications précédentes,
**caractérisé en ce que** le corps en forme de plaquette (4 ; 24) de la pièce d'espacement (2 ; 20) présente une épaisseur constante définie.

33. Dispositif selon au moins l'une quelconque des revendications précédentes,
**caractérisé en ce que** le corps en forme de plaquette (4 ; 24) de la pièce d'espacement (2 ; 20) présente une forme rectangulaire.

34. Dispositif selon au moins l'une quelconque des revendications précédentes,
**caractérisé en ce qu'**au moins un bord latéral (4c, 4d ; 24c, 24d) du corps en forme de plaquette (4 ; 24) est réalisé sous forme de bord (5 ; 25) de type bride dépassant au niveau d'au moins un côté.

35. Dispositif selon la revendication 34,
**caractérisé en ce que** le bord de type bride (5 ; 25) est réalisé au moins le long d'un côté longitudinal (4c, 4d ; 24c, 24d) du corps en forme de plaquette (4 ; 24).
